# EUROPEAN PATENT SPECIFICATION

(11) **EP 1 734 355 B1**
(45) Date of publication and mention of the grant of the patent: **28.11.2007**
(21) Application number: 05717210.8
(22) Date of filing: 11.03.2005
(51) Int. Cl.: G01M 17/007, B62D 53/08

(54) **MACHINE FOR INSPECTING THE COUPLING SYSTEM USED TO HITCH A SEMI-TRAILER TO A TOWING VEHICLE**
MASCHINE ZUM UNTERSUCHEN DES ZUM AUFSETZEN EINES HALBANHÄNGERS AN EIN ZIEHFAHRZEUG VERWENDETEN KOPPELSYSTEMS
MACHINE DE DIAGNOSTIC POUR L'ACCROCHE D'UN VEHICULE TRACTEUR D'UNE SEMI-REMORQUE

(30) Priority: 31.03.2004 ES 200400785
(43) Date of publication of application: 20.12.2006
(73) Proprietor: Betancor Bethencourt, Francisco, 35001 Las Palmas de Gran Canaria (ES)
(72) Inventor: Betancor Bethencourt, Francisco, 35001 Las Palmas de Gran Canaria (ES)
(74) Representative: PROPI, S.L.
(86) International application number: PCT/ES2005/000128
(87) International publication number: WO 2005/095920

(56) References cited:
- BE-A3- 1 001 991
- GB-A- 2 187 151
- SU-A1- 571 726

## Description

### OBJECT OF THE INVENTION

The present invention refers to a machine that has been especially designed to diagnose or periodically inspect the coupling system of a semi-trailer to the corresponding tractor vehicle with a view to assuring the driving safety of the assemblage in its regular transport by road.

Accordingly, the object of the invention is a machine capable of subjecting the tractor vehicle hitch to mechanical tensile and compression stresses similar to those occurring in practice, with the appropriate safety margins, in order to detect possible play or wear that could generate the unforeseeable separation between the tractor vehicle and the semi-trailer in the normal use of these elements.

### BACKGROUND OF THE INVENTION

As we know, the type of vehicle that has just been mentioned takes the form of a tractor vehicle with a small upper rear platform on which a hitch is established, referred to commonly as the "fifth wheel", to which a sturdy vertical descending pin bolt may be coupled in an articulated manner, belonging to the semi-trailer, commonly referred to as the "king-pin", established in the lower front area of same.

The afore-mentioned king-pin takes the form of a sturdy solid and compact revolving element, provided with a perimeter groove that forms the coupling area to the fifth wheel, and on account of its actual nature said king-pin does not involve significant maintenance problems.

The same does not apply to the hitch or fifth wheel, consisting of a kind of ring open towards the rear, capable of receiving the king-pin transversely, and which is provided with mechanisms that have to permit the access of the king-pin and bring about its automatic locking by means of the necking of its mouth, mechanisms which on account of their actual design and operating capability gradually become worn in time due to the stresses to which they are subjected all the time, which end up generating wear and play, which, as mentioned above, may give rise to the fact that the semi-trailer may become uncoupled unexpectedly at a given moment while the vehicle is being driven along the road.

This calls for periodic checks on the fifth wheel, which hitherto have been based on visual inspections, in the best of cases assisted by measuring tools, which obviously does not provide the desired degree of diagnostic reliability.

The applicant is unaware of the existence of machines capable of carrying out the diagnosis by applying the forces and movements equivalent to those that occur in practice in the normal use of the vehicle.

### DESCRIPTION OF THE INVENTION

The machine proposed by the invention has been designed and structured with a view to reproducing during the diagnosis the actual most unfavourable conditions to which the hitch or fifth wheel may be subjected.

To this end and more specifically, said machine is structured on the basis of a strong base platform, with an access ramp for the tractor vehicle to reverse in, capped at its other end by an extremely strong high structure on which a bridge is mounted with the option of both vertical and transverse movement and equipped with means for locking it in its final working position, said bridge being the carrier on its underside of a king-pin similar to that of a semi-trailer, in such a way that the movement of the bridge allows the king-pin to be appropriately centred in relation to the tractor vehicle being tested, while the arrangement of the afore-mentioned king-pin on a steel plate, sliding longitudinally on the bridge, enables the necessary movement to be supplied to it for its coupling to the fifth wheel.

For the suitable attachment of the vehicle to the machine, the latter is provided on its base platform with a longitudinally sliding platform on which two triangular profile chocks are established, suitably shaped so that the rear wheels of the tractor vehicle come up against them, in conjunction with a hinged front chock capable of adopting a horizontal position in which it permits the vehicle wheels to pass over it and of then swivelling in an upward direction so as to lock them from the front side of same against the fixed chocks.

The moving or hinged chock is operated by a hydraulic ram which is directed in a longitudinal and centred manner towards the rear structure of the machine and which, furthermore, performs the function of drawing the moving platform in an initial movement of approximation between its fifth wheel and the machine king-pin.

Rear jointed stops, for operation by hand by means of control rods or levers, enable the sliding platform to be stabilized in the appropriate working position, said jointed stops being engaged in the spaces defined between the transverse bars or stops fixed to the base of the machine.

Once the vehicle has been suitably positioned and stabilized, with the machine bridge in the elevated position, said bridge is subjected to a suitable lowering and side-shifting movement, by means of horizontal and vertical guides which connect said bridge to the structure of the machine, until the king-pin is duly aligned with the fifth wheel, whereupon a movement in the forward direction of the steel plate of the carrier bridge brings about the locking of the latter in the hitch or fifth wheel, after which the machine performs some longitudinal and transverse movements, i.e. on an imaginary horizontal plane, exerting a given force so that the telemetry systems may assess the axial movement of the mechanisms securing the king-pin in the fifth wheel.

After carrying out the diagnosis, the operator actuates the fifth wheel lock, releasing the king-pin, so as to then invert the process of the whole manoeuvre until the tractor vehicle is released and issues from the machine.

### DESCRIPTION OF THE DRAWINGS

To supplement the description that is being given and in order to assist in a clearer understanding of the features of the invention, in accordance with a preferred practical embodiment of same, a set of drawings is adjoined as an integral part of said description, wherein there is represented on an informative and non-restrictive basis the following:

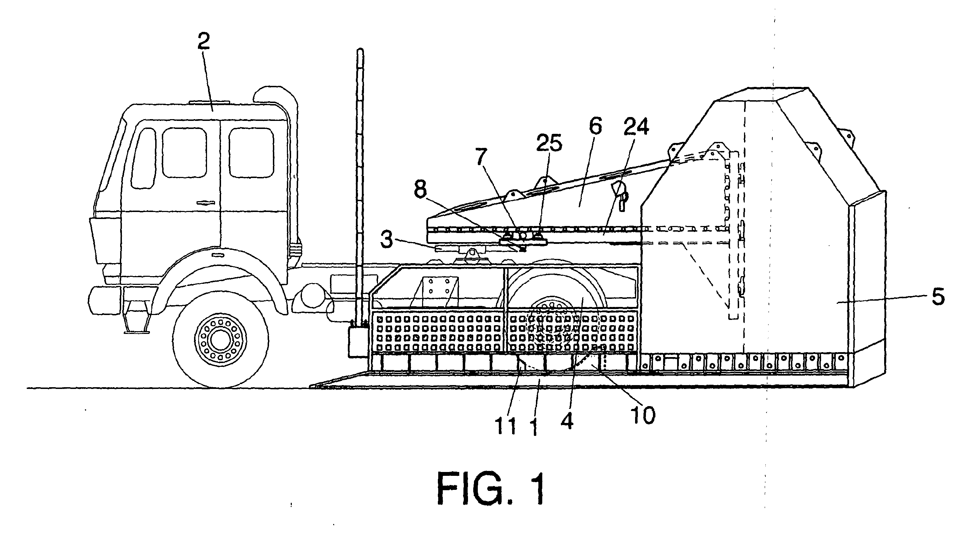

Figure 1.- It shows a diagrammatic side perspective view of a diagnosis machine for a semi-trailer tractor vehicle hitch, executed in accordance with the object of the present invention, and on which there appears a tractor vehicle coupled.

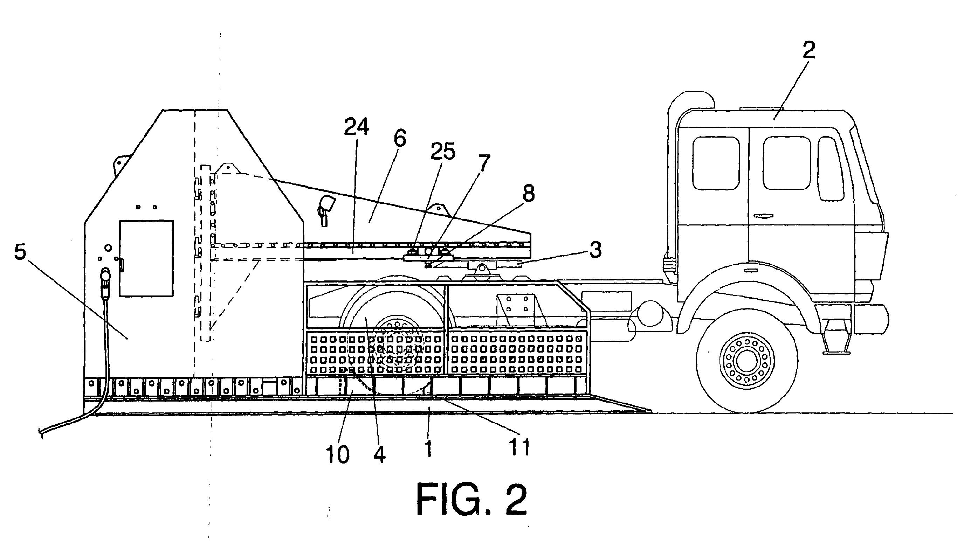

Figure 2.- It shows a side elevational view of the assemblage represented in figure 1, from the opposite side.
Figure 3.- It shows a close perspective view of the machine base platform, the sliding platform established on it, and its respective ancillary mechanisms.
Figure 4.- It shows a partial side perspective view of the assemblage represented in the previous figure.
Figure 5.- It shows a front close perspective view of the elevated structure of the machine and the bridge that protrudes from it.

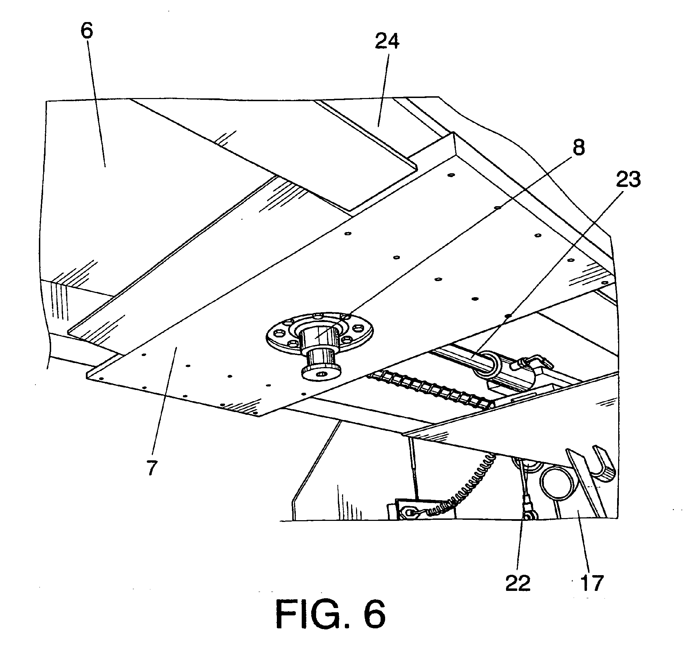

Figure 6.- It shows a lower close perspective view of the afore-mentioned bridge of the machine, at the level of the king-pin support plate.
Figure 7.- It lastly shows a close perspective view of the rolling means that permit the longitudinal movement of the king-pin support plate over the machine bridge.

### PREFERRED EMBODIMENT OF THE INVENTION

In the light of the above-mentioned figures it may be observed that the machine proposed by the invention is composed on the basis of a base platform (1), suitably sized to permit the coupling on it of the rear end of the tractor vehicle (2), that provided with the hitch or fifth wheel (3), said base platform being equipped with locking means for the rear wheels (4) of said vehicle, as will be seen later on, and being topped at the rear with an extremely sturdy superstructure (5), which also serves as a cabinet for storing the electropneumatic equipment that assists the machine, while from the front of the structure (5) there emerges a strong bridge (6), which is superimposed over the front free section of the base platform (1) and which, as will be seen below, is set up to be moved both in the vertical and in the transverse direction, incorporating on its under side an in turn longitudinally sliding steel plate (7), inferiorly integral with which is a king-pin (8) identical to that of a semi-trailer for coupling to said tractor vehicle (2) and also intended for coupling to the latter's fifth wheel (3).

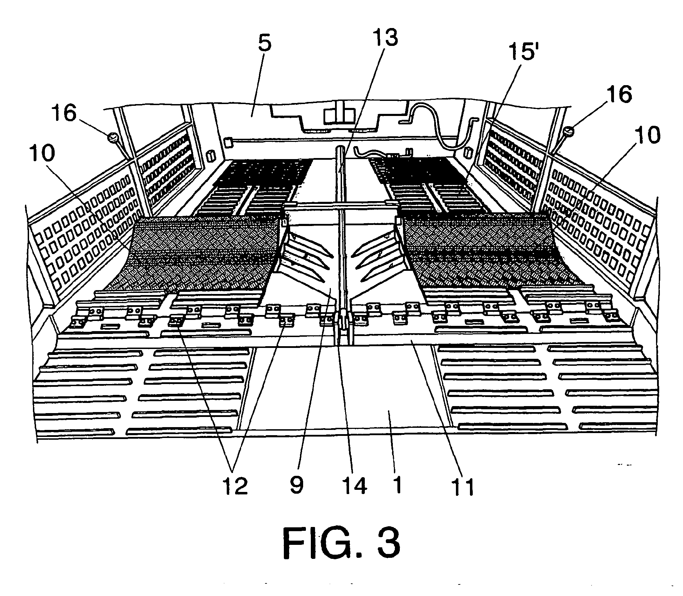

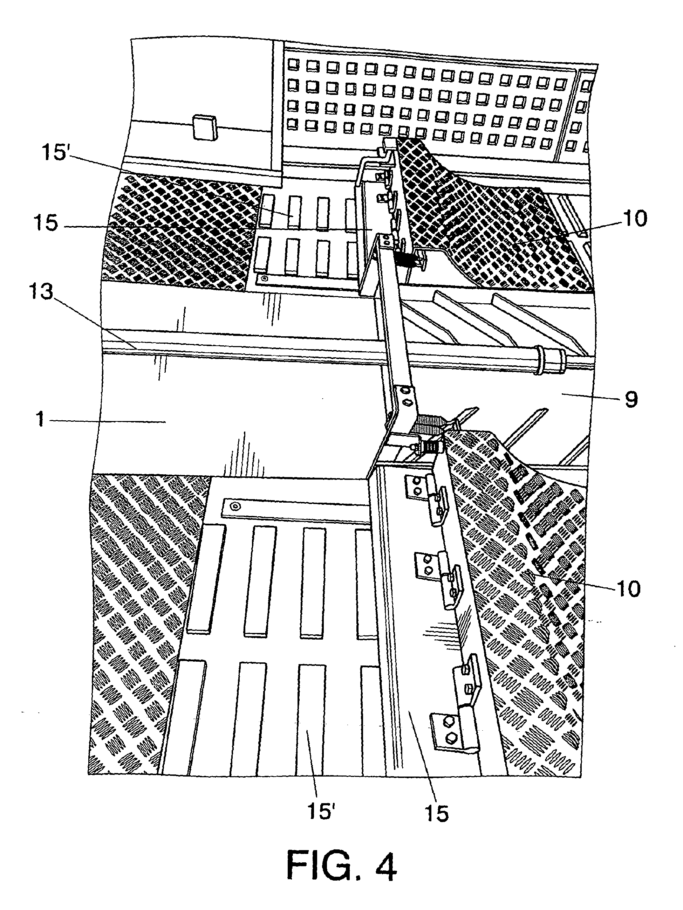

Mounted on the base platform, as may be observed in figures 3 and 4, there is a sliding platform (9), assisted by bearings that facilitate its movement, a platform (9) at which two large front profile side fixed chocks (10) are established in the form of a wedge suitable for adapting to the rear area of the likewise back wheels (4) of the tractor truck (2), thereby limiting the travel of said wheels when the vehicle reverses partly into the machine.

These rear fixed chocks (10) are supplemented with an essentially flat profile pivoting front chock, which is attached by means of hinges (12) to the front edge of the sliding platform (9) and which is capable of adopting a horizontal layout, as shown in figure 3, in which it permits the free passage of the wheels towards the limit position defines by the fixed chocks (10), after which a swivelling movement of same brings about the locking of the wheels from their front side.

This swivelling movement of the chock (11) is carried out with the aid of a hydraulic ram (13), which is jointed at its front end to a yoke (14) mounted on the actual chock (11) and which is attached to the structure (5) at its rear end.

This ram (13) further has the function of drawing the sliding platform (9) longitudinally so that the hitch or fifth wheel (3) of the tractor vehicle (2), previously between one chock and another, also undergoes an initial approximation to the machine king-pin (8).

At its rear area the sliding or moving platform (9) incorporates a pair of jointed stops (15), for operation by means of side control rods (16), such that these stops (15) are susceptible to adopt an elevated position in which they are inoperative, and once the sliding platform (9) has adopted its final working position, controlled visually by the operator, swivel downwards to become engaged in the transverse slots defined between bars or stops (15') suitably spread over the base platform (1), in such a way that, once these sliding stops (15) adopt an operating position, the sliding platform (9) is rigidly locked to the base platform (1) and the tractor vehicle (2) is therefore immobilized.

For the mobilization of the bridge (6), at its rear end this is provided with a vertical descending plate (17), fitted on its front side with guides matching other guides (18) on the front face of an intermediate plate (19), of considerably greater height, which in turn is provided on its rear face with transverse guides, complementary to which are horizontal guides, duly attached solidly to the structure (1), so that the bridge (6) is susceptible to slide vertically up the guides (18) and to do so, in turn, transversely across the guides (20).

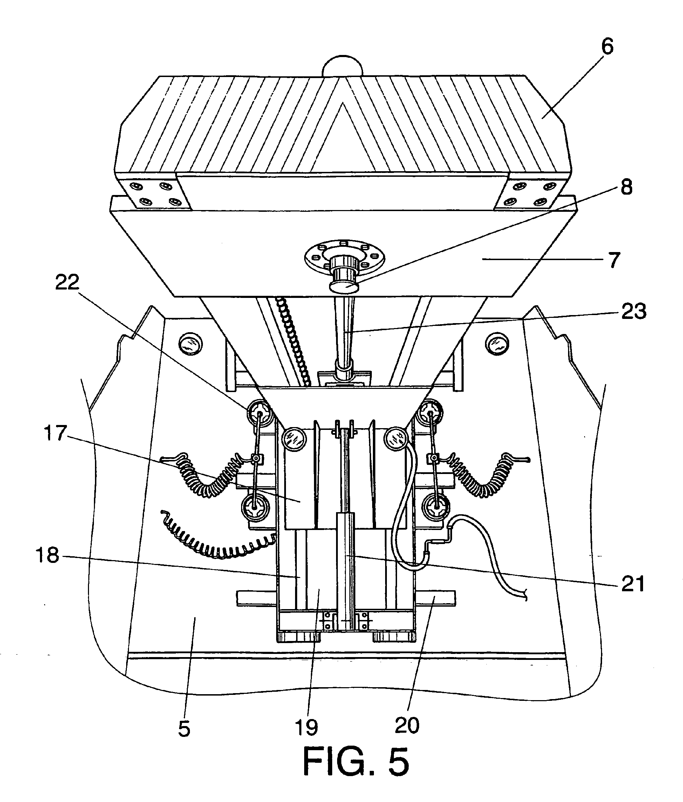

The vertical movement of the bridge (6) is carried out with a hydraulic arm (21), especially visible in figure 5, and its transverse movement may be effected by equivalent means.

Once the bridge (6) has adopted its final working position in relation to the tractor vehicle (2), the rigid locking of same takes place with the assistance of a set of similarly hydraulically-operated brake elements (22).

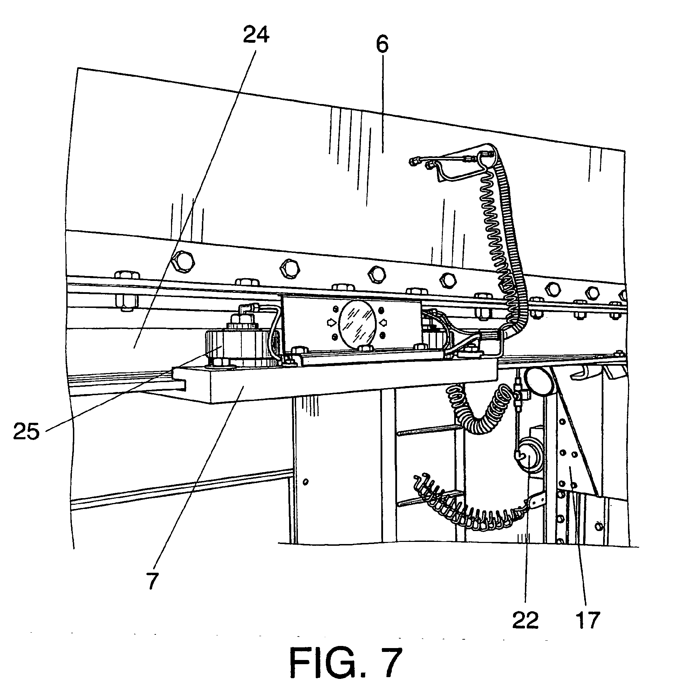

On the underside of the bridge (6) is established the afore-mentioned steel plate (7), sliding longitudinally under the action of a hydraulic ram (23), a plate which acts as the king-pin (8) carrier. More specifically, the bridge has lateral and horizontal guides (24) established, along which slide wheels (25) mounted on the actual plate (7), as may be observed in figure 7, the mobility of said plate (7) having the sole purpose of carrying out the manoeuvre of coupling the king-pin (8) to the fifth wheel (3), once both elements have been duly aligned by means of the mobilization of the sliding plate (9) and of the actual bridge (6), the repeatedly aforesaid plate (7) being provided with means of locking once coupling has taken place.

Therefore, in accordance with the above-described layout, the working of the machine is as follows:

With the front chock (11) folded down the driver of the tractor vehicle (2) reverses this into the machine until its back wheels (4) impinge on the fixed chocks (10), which is when he applies the brakes of the vehicle.

Immediately afterwards the raising of the moving chock (11) takes place so as to lock the rear wheels (4) on their front side, and the sliding platform (9) is moved backwards by means of the actual hydraulic ram (13) which has actuated the front chock (11), as far as the working position of the machine, when the locking of this moving slide takes place so as to align the hinged rear stops (15) appropriately with one of the slots defined by the base platform (1) bars or stops (15').

During this manoeuvre the bridge (6) will adopt an upper limit situation, and after the stabilization of the sliding platform (9) the bridge (6) is then lowered until the king-pin (8) is positioned on the plane of reception of the fifth wheel (3), whereupon said bridge (6) proceeds to slide transversely so that both elements (8) and (3) are duly aligned.

Finally, a forward movement of the king-pin (8) carrier plate (7) is carried out until said pin enters the fifth wheel (3) and automatic locking takes place.

All these manoeuvres will be duly controlled by the operator attending the machine, preferably by way of a remote control.

Once the king-pin (8) is locked by the fifth wheel (3), suitable stresses may be applied to these elements to assess the axial movement of the mechanisms securing the king-pin to the fifth wheel, the data relevant to the state of said fifth wheel (3) being obtained by way of a telemetry system.

## Claims

1. Diagnosis machine for a tractor vehicle semi-trailer hitch, which, having as its purpose to detect the conditions in which the aforesaid hitch or fifth wheel of the vehicle is currently in, i.e. to determine whether it is fit to withstand the stresses to which it will be subjected in the most unfavourable conditions when the matching king-pin solidly attached to the front underside area of the semi-trailer to be transported is attached to same, is **characterised in that** it is made up of a base platform (1), suitably sized to receive, by way of a front ramp, the rear area of the tractor vehicle (2), being topped at its other end with an elevated structure (5) to which there is connected at the front a horizontal bridge (6), which incorporates a lower pin (8), equivalent to a conventional king-pin, there being established on the base platform (1) a sliding platform (9) for receiving the rear wheels (4) of the vehicle (2) and which permits the latter to move longitudinally within the machine, while the upper bridge (6) is also able to slide both in the vertical and in the transverse direction for the purpose of achieving an initial approximation between the machine king-pin (8) and the hitch or fifth wheel (3) of the tractor vehicle (2), said king-pin (8) being situated on a steel plate (7) slide-mounted on the underside of the bridge (6), which enables the final manoeuvre of coupling the king-pin within the fifth wheel (3) to be carried out.

2. Diagnosis machine for a tractor vehicle semi-trailer hitch, according to claim 1, **characterised in that** on the sliding platform (9), fitted with bearings for moving over the fixed platform (1), a pair of fixed chocks (10) is established for supporting the rear area of the wheels (4) of the vehicle, and a hinged front chock (11), for locking said wheels against the rear chocks (10), said front chock (11) being operated by a hydraulic ram (13), which extends between same and the rear structure (5) of the machine, and which further acts as a driving element for the sliding platform, which is equipped at the rear with a pair of jointed stops (15), which, for operation by hand by means of rods (16), is susceptible to be coupled in one of the multiple transverse slots defined by a plurality of bars or fixed stops (15') attached solidly to the base plate (1).

3. Diagnosis machine for a tractor vehicle semi-trailer hitch, according to claim 1, **characterised in that** integrated with the rear end of the bridge (6) is a vertical descending plate (17), fitted on its front face with guides for its movement over matching vertical guides (18) established in an intermediate plate (19), which in turn incorporates on its rear face transverse guides complementary to horizontal guides (20) established in the front face of the structure (5), so that by way of both sets of guides (18) and (20) the bridge (6) is susceptible to slide vertically and transversely for the correct alignment of its king-pin (8) with the fifth wheel (3) of the vehicle (2), while further a plurality of hydraulic brakes (22) that lock the bridge (6) in the structure (5) in its final working position.

4. Diagnosis machine for a tractor vehicle semi-trailer hitch, according to claims 1 and 3, **characterised in that** the king-pin (8) carrier plate (7) is sliding on longitudinal guides (24) on the bridge (6), with the assistance of wheels or rollers (25), for the final coupling of the king-pin (8) to the fifth wheel (3), said plate (7) also being provided with means for locking after coupling.

5. Diagnosis machine for a tractor vehicle semi-trailer hitch, according to the foregoing claims, **characterised in that** its different operating systems are centralized in a remote control, which enables the operator, after coupling the king-pin (8) to the fifth wheel (3), to apply stresses to said coupling within a horizontal plane, assisted by a telemetry system that permits the measuring of the relative movement between both elements, that is to say between the king-pin (8) and the fifth wheel (3).

## Patentansprüche

1. Diagnosegerät für eine Auflieger-Anhängerkupplung einer Zugmaschine, das, da dieses zum Ziel hat, den Zustand zu ermitteln, in dem sich die besagte Anhängerkupplung oder der Sattelzapfen des Fahrzeugs derzeitig befindet, dass heißt zu ermitteln, ob diese dafür geeignet ist, den Belastungen zu widerstehen, denen sie unter den ungünstigsten Bedingungen ausgesetzt sein wird, wenn der abgestimmte, fest mit dem vorderen Bereich der Unterseite des zu transportierenden Aufliegers verbundene Sattelzapfen an demselben befestigt wird, **dadurch gekennzeichnet ist, dass** diese aus einer Grundplattform (1) besteht, die angemessen bemessen ist, um mittels einer frontalen Rampe den hinteren Bereich der Zugmaschine (2) aufzunehmen, wobei diese an deren anderem Ende von einer erhöhten Struktur (5) überragt wird, mit der an deren Stirnseite eine horizontale Brücke (6) verbunden ist, die einen unteren Zapfen (8) einschließt, der mit einem herkömmlichen Sattelzapfen äquivalent ist, wobei auf der Grundplattform (1) eine Gleitplattform (9) aufgebaut ist, um die Hinterräder (4) des Fahrzeugs (2) aufzunehmen, und die es dem letzteren ermöglicht, sich der Länge nach innerhalb des Geräts zu bewegen, während die obere Brücke (6) ebenfalls dazu in der Lage ist, sowohl in der vertikalen als auch in der querlaufenden Richtung zu gleiten, um eine anfängliche Annäherung zwischen dem Sattelzapfen (8) des Geräts und der Anhängerkupplung oder dem Sattelzapfen (3) der Zugmaschine (2) zu erreichen, wobei der besagte Sattelzapfen (8) sich auf einer Stahlplatte (7) befindet, die gleitend auf der Unterseite der Brücke (6) montiert ist, die die Durchführung des abschließenden Manövers der Ankopplung des Sattelzapfens innerhalb des Sattelzapfens (3) ermöglicht.

2. Diagnosegerät für eine Auflieger-Anhängerkupplung einer Zugmaschine nach Anspruch 1, **dadurch gekennzeichnet, dass** auf der Gleitplattform (9), die mit Wälzlagern zur Bewegung über der festen Plattform (1) ausgestattet ist, ein Paar fester Hemmschuhe (10) festgelegt ist, um den hinteren Bereich der Räder (4) des Fahrzeugs zu stützen, sowie ein mit Scharnieren versehener vorderer Hemmschuh (11) zur Sperrung der besagten Räder gegen die hinteren Hemmschuhe (10), wobei der besagte vordere Hemmschuh (11) über einen hydraulischen Kolben (13) betrieben wird, der sich zwischen demselben und der hinteren Struktur (5) des Geräts erstreckt und der außerdem als ein Antriebselement der Gleitplattform handelt, die hinten mit einem Paar mit Gelenken versehenen Anschlägen (15) ausgestattet ist, die für den manuellen Betrieb mittels Kurbelstangen (16) dafür empfänglich ist, in einer der multiplen Quernuten eingekuppelt zu werden, die von einer Vielzahl von Stangen oder festen Anschlägen (15') definiert wird, die fest mit der Grundplatte (1) befestigt sind.

3. Diagnosegerät für eine Auflieger-Anhängerkupplung einer Zugmaschine nach Anspruch 1, **dadurch gekennzeichnet, dass** eine vertikale absteigende Platte (17) mit dem hinteren Ende der Brücke (6) integriert ist, die an ihrer Stirnseite mit Führungen für deren Bewegung über passende, in einer Zwischenplatte (19) festgelegten vertikalen Führungen (18) ausgestattet ist, die wiederum auf deren hinterer Seite querlaufende Führungen ergänzend zu in der Stirnseite der Struktur (5) festgelegten horizontalen Führungen (20) einschließt, so dass die Brücke (6) durch die beiden Sätze von Führungen (18) und (20) dafür empfänglich ist, vertikal und querlaufend zur korrekten Ausrichtung deren Sattelzapfens (8) mit dem Sattelzapfen (3) des Fahrzeugs (2) zu gleiten, während weiterhin eine Vielzahl hydraulischer Bremsen (22) die Brücke (6) in der Struktur (5) in deren endgültiger Betriebsposition halten.

4. Diagnosegerät für eine Auflieger-Anhängerkupplung einer Zugmaschine nach Anspruch 1 und Anspruch 3, **dadurch gekennzeichnet, dass** die Trägerplatte (7) des Sattelzapfens (8) mit Hilfe von Rädern oder Rollen (25) auf Längsführungen (24) auf der Brücke (6) gleitet, für die endgültige Ankopplung des Sattelzapfens (8) mit dem Sattelzapfen (3), wobei die besagte Platte (7) auch mit Mitteln zur Sperrung nach der Ankopplung ausgestattet ist.

5. Diagnosegerät für eine Auflieger-Anhängerkupplung einer Zugmaschine nach einem der vorherigen Ansprüche, **dadurch gekennzeichnet, dass** dessen unterschiedliche Betriebssysteme in einer Fernsteuerung zentralisiert sind, die es dem Bediener nach der Ankopplung des Sattelzapfens (8) an den Sattelzapfen (3) ermöglicht, innerhalb einer horizontalen Ebene Belastungen auf die besagte Kupplung aufzubringen, unterstützt von einem Telemetriesystem, das die Messung der relativen Bewegung zwischen beiden Elementen ermöglicht, dass heißt zwischen dem Sattelzapfen (8) und dem Sattelzapfen (3).

## Revendications

1. Machine de diagnostic pour un attelage de semi-remorque de véhicule tracteur, qui, ayant pour but de détecter les conditions dans lesquelles l'attelage précité ou sellette d'attelage du véhicule est actuellement en position, c'est-à-dire de déterminer s'il est ajusté pour résister aux contraintes auxquelles il sera soumis dans les conditions les plus défavorables lorsque le pivot d'articulation correspondant solidement attaché à la zone de dessous avant de la semi-remorque à transporter sera attaché à cette dernière, est **caractérisée en ce qu'**elle est composée d'une plate-forme de base (1), aux dimensions adaptées pour recevoir, au moyen d'une rampe avant, la zone arrière du véhicule tracteur (2), étant recouverte à son autre extrémité d'une structure élevée (5) à laquelle est connecté à l'avant un pont (6) horizontal, qui comporte un goujon inférieur (8), équivalent à un pivot d'articulation conventionnel, étant placée à cet endroit sur la plate-forme de base (1) une plate-forme de glissement (9) pour recevoir les roues arrière (4) du véhicule (2) et qui permet à ce dernier de se déplacer longitudinalement dans la machine, pendant que le pont supérieur (6) est également capable de glisser dans le sens vertical et dans le sens transversal dans le but de parvenir à une approximation initiale entre le pivot d'articulation (8) de la machine et l'attelage ou la sellette d'attelage (3) du véhicule tracteur (2), ledit pivot d'articulation (8) étant situé sur une plaque d'acier (7) montée de façon à glisser sur la face de dessous du pont (6), ce qui permet à la manoeuvre finale de couplage du pivot d'articulation dans la sellette d'attelage (3) d'être réalisée.

2. Machine de diagnostic pour un attelage de semi-remorque de véhicule tracteur, selon la revendication 1, **caractérisée en ce que** sur la plate-forme de glissement (9), équipée de coussinets pour se déplacer sur la plate-forme fixe (1), une paire de cales fixes (10) est placée pour soutenir la zone arrière des roues (4) du véhicule, et une cale avant articulée (11), pour bloquer lesdites roues contre les cales arrière (10), ladite cale avant (11) étant actionnée par un vérin hydraulique (13), qui s'étend entre cette dernière et la structure arrière (5) de la machine, et qui agit en outre comme un élément de pilotage pour la plate-forme de glissement, qui est équipée à l'arrière d'une paire de butées (15) assemblées, qui, pour une opération manuelle au moyen de tiges (16), est susceptible d'être couplée dans l'une des multiples rainures transversales définies par une pluralité de barres ou de butées fixes (15') solidement attachées à la plaque de base (1).

3. Machine de diagnostic pour un attelage de semi-remorque de véhicule tracteur, selon la revendication 1, **caractérisée en ce que**, intégrée à l'extrémité arrière du pont (6) on trouve une plaque descendante verticale (17), équipée sur sa face avant de guides pour son déplacement sur des guides verticaux (18) correspondants placés sur une plaque intermédiaire (19), qui à son tour comporte sur sa face arrière des guides transversaux complémentaires de guides horizontaux (20) placés sur la face avant de la structure (5), pour qu'à l'aide des deux jeux de guides (18) et (20) le pont (6) soit susceptible de glisser verticalement et transversalement pour l'alignement correct de son pivot d'articulation (8) avec la sellette d'attelage (3) du véhicule (2), pendant que par ailleurs une pluralité de freins hydrauliques (22) bloquent le pont (6) dans la structure (5) dans sa position de travail finale.

4. Machine de diagnostic pour un attelage de semi-remorque de véhicule tracteur, selon les revendications 1 et 3, **caractérisée en ce que** la plaque porteuse (7) du pivot d'articulation (8) glisse sur des guides longitudinaux (24) sur le pont (6), à l'aide de roues ou de galets (25), pour le couplage final du pivot d'articulation (8) à la sellette d'attelage (3), ladite plaque (7) étant également pourvue de moyens pour un blocage après le couplage.

5. Machine de diagnostic pour un attelage de semi-remorque de véhicule tracteur, selon les revendications précédentes, **caractérisée en ce que** ses différents systèmes de fonctionnement sont centralisés dans une commande à distance, qui permet à l'opérateur, après le couplage du pivot d'articulation (8) à la sellette d'attelage (3), d'appliquer des contraintes audit couplage sur un plan horizontal, à l'aide d'un système de télémétrie qui permet la mesure du mouvement relatif entre les deux éléments, c'est-à-dire entre le pivot d'articulation (8) et la sellette d'attelage (3).
